# EUROPEAN PATENT APPLICATION

(11) **EP 3 050 662 A1**
(43) Date of publication of application: **03.08.2016**
(21) Application number: 13894719.7
(22) Date of filing: 01.11.2013
(51) Int. Cl.: B23G 5/06, B23G 1/46

(54) **SCREW TAP WITH REPLACEABLE TOOL BIT**

(30) Priority: 25.09.2013 CN 201310453057
(71) Applicant: Chen, Li-Cheng, Taiwan (TW)
(72) Inventor: Chen, Li-Cheng, Taiwan (TW)
(74) Representative: Melchior, Robin
(86) International application number: PCT/CN2013/086393
(87) International publication number: WO 2015/043041

(57) **Abstract**

A screw tap with replaceable tool bit has a holding body (10), a detachable blade (20), and a fixing element. The holding body (10) has a receiving area (13) and a first engaging portion. The detachable blade (20) is mounted in the receiving area (13) of the holding body (10) and has a second engaging portion, and the second sharp part of the second engaging portion engages with the first sharp part of the first engaging portion. The fixing element is securely mounted through the holding body (10) and the detachable blade (20). The detachable blade (20) can disassemble from the holding body (10), and thus one holding body (10) could be installed with detachable blades (20) of various dimensions. As the detachable blade (20) is damaged, the damaged detachable blade (20) is replaced with a new detachable blade (20) to keep processing.

## Description

### BACKGROUND

### 1. Field of the Invention

The present invention relates to a tap with a replaceable tapping blade, especially to a tap that can be installed with tapping blades of various dimensions.

### 2. Description of the Prior Arts

Taps are common in the processing industry to form screw holes. The conventional tap is integrated, and the tapping blades are directly formed on the tapping body of the tap. Tapping blades of the same diameter include the straight type and inclined type, and the pitch dimensions of the tapping blade may be in metric unit, imperial unit, and American unit. Thus, taps of various dimensions are prepared to process screw holes of various dimensions. Therefore the cost of the tap rises. In addition, the screw holes are often processed on the steel material, and the tapping blades of the tap are easily damaged during processing. After the tapping blades are damaged, the whole tap is useless and needs to be replaced with a new one, and the replacement costs a lot and wastes the resources.

To overcome the shortcomings, the present invention provides a screw tap with replaceable tool bit to mitigate or obviate the aforementioned problems.

### SUMMARY OF THE INVENTION

The main objective of the present invention is to provide a blade-replaceable tap for which the tapping blades are replaceable conveniently to achieve the goal of cutting cost.

The screw tap with replaceable tool bit comprises a holding body, a detachable blade, and a fixing element. The holding body has a first clamping plate, a second clamping plate, a receiving area, and a first engaging portion. The first clamping plate and the second clamping plate are respectively formed and extend on the holding body, the receiving area is formed between the first clamping plate and the second clamping plate, and the first engaging portion is mounted between the first clamping plate and the second clamping plate and has a first sharp part. The detachable blade is mounted in the receiving area of the holding body and has a blade portion and a second engaging portion. The blade portion is formed on two sides of the detachable blade. The second engaging portion is formed on an outer surface of an end of the detachable blade and engages with the first engaging portion of the holding body, the second engaging portion has a second sharp part, and the second sharp part of the second engaging portion corresponds to and engages with the first sharp part of the first engaging portion. The fixing element is securely mounted through the first clamping plate, the second clamping plate and the detachable blade.

The present invention has the advantage that the detachable blade is mounted in the holding body and the first engaging portion engages with the second engaging portion to position the detachable blade. When intending to process screw holes of various dimensions, the detachable blade is changed to another blade that has a corresponding dimension into the holding body to start processing. And one holding body could be installed with detachable blades of various dimensions. As the detachable blade is damaged, the damaged detachable blade could be replaced with a new detachable blade to keep processing. The present invention is convenient to replace a new detachable blade when processing and effectively cut the cost of replacing damaged blades.

Other objectives, advantages and novel features of the invention will become more apparent from the following detailed description when taken in conjunction with the accompanying drawings.

### BRIEF DESCRIPTION OF THE DRAWINGS

The invention will be elucidated on the basis of an exemplary embodiment shown in the attached drawings, in which:
Fig. 1 is a perspective view of a first embodiment of a screw tap with replaceable tool bit in accordance with the present invention;
Fig. 2 is an exploded view of the first embodiment of the screw tap with replaceable tool bit in Fig. 1;
Fig. 3 is a cross-sectional view of the first embodiment of the screw tap with replaceable tool bit in Fig. 1;
Fig. 4 is an exploded top view of the first embodiment of the screw tap with replaceable tool bit in Fig. 1; and
Fig. 5 is an exploded top view of a second embodiment of a screw tap with replaceable tool bit in accordance with the present invention.

### DETAILED DESCRIPTION OF THE INVENTION

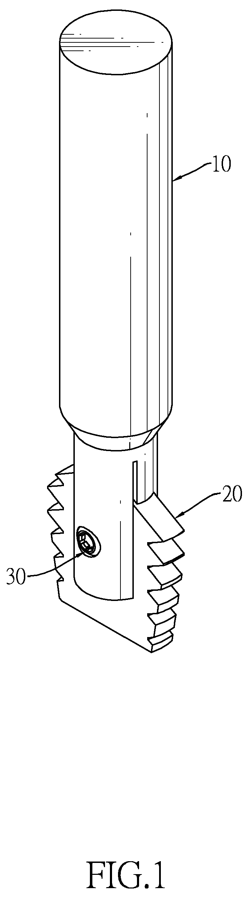

With reference to Fig. 1, the replaceable tap in accordance with the present invention has a holding body 10, a detachable blade 20, and a fixing element 30.

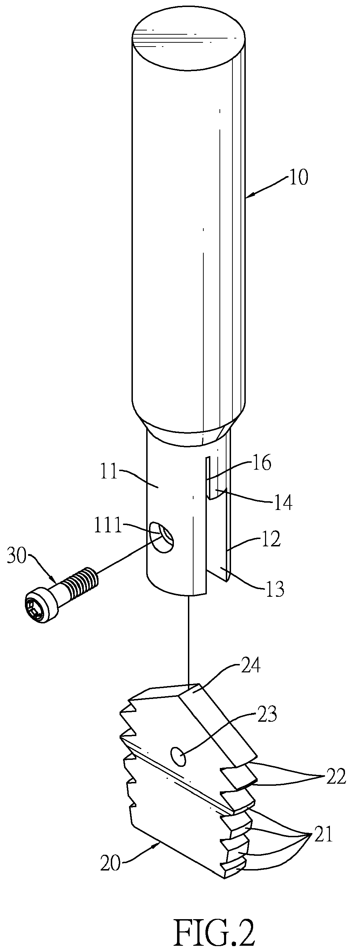

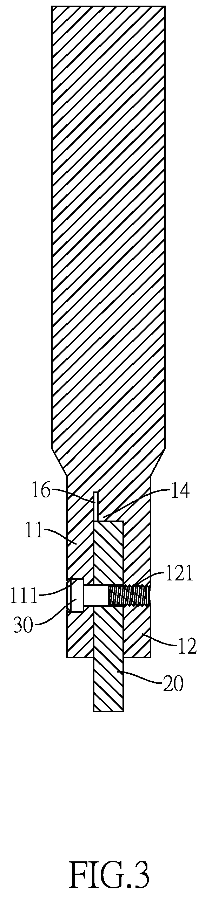

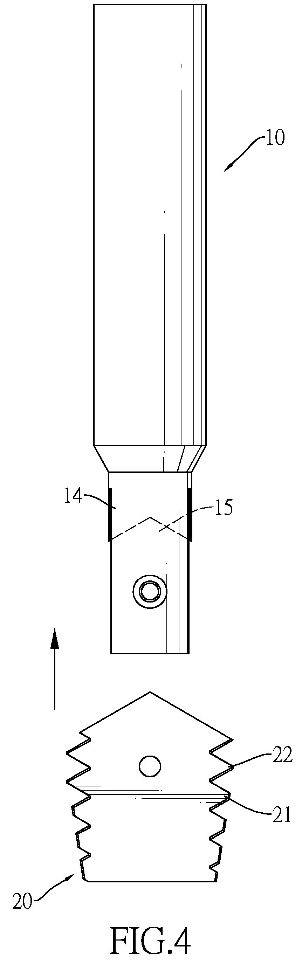

Figs. 2 and 3 show the first embodiment of the present invention. The holding body 10 is made of steel and has a first clamping plate 11, a second clamping plate 12, a receiving area 13, and a first engaging portion. The first clamping plate 11 and the second clamping plate 12 are respectively formed on an outer surface of the holding body 10 and extend out of the holding body 10. A through hole 111 is formed through the first clamping plate 11, and a screw hole 121 is formed through the second clamping plate 12 and aligns with the through hole 111. The receiving area 13 is formed between the first clamping plate 11 and the second clamping plate 11. The first engaging portion has an extending block 14, a groove 15, and a first sharp part. The extending block 14 is formed on two inner surfaces of the first clamping plate 11 and of the second clamping plate 12, and the extending block 14 is disposed in an end of the receiving area 13. With reference to Fig. 4, the groove 15 is formed in a surface of the extending block 14, and the groove 15 has two inner inclined surfaces. The first sharp part is formed in a center of a bottom end of the groove 15. In a preferred embodiment, a gap 16 is formed through the first clamping plate 11 and the extending block 14.

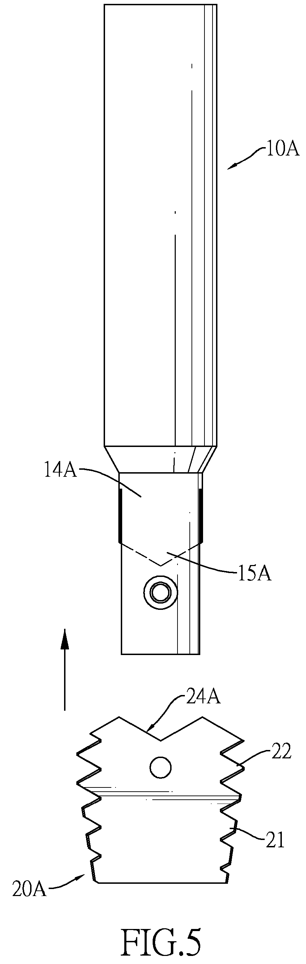

With reference to Fig. 5, a second embodiment of the present invention is substantially the same as the first embodiment. The difference is that the first engaging portion of the holding body 10A has an extending block 14A and a flange 15A. The flange 15A is formed on and protrudes from an outer surface of the extending block 14A, and the flange 15A has two outer inclined surfaces. The first sharp part is formed on a center of a top end of the flange 15A.

With reference to Figs. 2 and 4, the detachable blade 20 is held in the receiving area 13 of the holding body 10 and has a second engaging portion and a blade portion. The second engaging portion of the detachable blade 20 engages with the first engaging portion of the holding body 10, and has a second sharp part, and the second sharp part of the second engaging portion engages with the first sharp part of the first engaging portion. Two outer surfaces of the detachable blade 20 respectively abut the first clamping plate 11 and the second clamping plate 12. The blade portion of the detachable blade 20 has multiple cutting edges 21 and at least one wiper 22. The multiple cutting edges 21 and the at least one wiper 22 are respectively formed on two sides of the detachable blade 20. The multiple cutting edges 21 are disposed at one end of the detachable blade 20, and the at least one wiper 22 is disposed at the other end of the detachable blade 20. The width of the detachable blade 20 gradually increases from the cutting edges 21 to the at least one wiper 22. The detachable blade 20 further has a through hole 23, and the through hole 23 is formed through the detachable blade 20. The second engaging portion is a flange 24 formed on and protruding from an outer surface of an end of the detachable blade 20 that connects to the at least one wiper 22. The flange 24 has two outer inclined surfaces and the second sharp part is formed on a center of a top end of the flange 24. The flange 24 engages with the groove 15 of the holding body 10 to position the detachable blade in the holding body 10.

With reference to Fig. 5, in the second embodiment, the second engaging portion of the detachable blade 20A is a groove 24A formed in an end of the detachable blade 20A that connects to the at least one wiper 22. The groove 24A has two inner inclined surfaces and the second sharp part is formed in a center of a bottom end of the groove 24A. The groove 24A engages with the flange 15A of the holding body 10A.

With reference to Figs. 2 and 3, the fixing element 30 is securely mounted through the holding body 10 and the detachable blade 20. In a preferred embodiment, the fixing element 30 is a screw bolt. The screw bolt is mounted through the through hole 111 of the first clamping plate 11 and the through hole 23 of the detachable blade 20, and finally the screw bolt is securely engaged with the screw hole 121 of the second clamping plate 12.

The advantage of the present invention is that a holding body 10 can be installed with detachable blades 20 of different dimensions to process screw holes of various dimensions. When the detachable blade 20 is damaged, the damaged detachable blade is replaced with a new detachable blade instead of replacing the whole tap. Because the holding body 10 is made of steel and has elasticity, the first clamping plate 11 has elastic deformation within the gap 16 and facilitates ease in dissembling or installing the detachable blade 20. The detachable blade 20 is precisely positioned by engaging the flange 24 with the groove 15.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A screw tap with replaceable tool bit, **characterized in that** the screw tap with replaceable tool bit comprises:
a holding body (10, 10A) having
a first clamping plate (11) formed and extending on the holding body (10, 10A);
a second clamping plate (12) formed and extending on the holding body (10, 10A);
a receiving area (13) formed between the first clamping plate (11) and the second clamping plate (12); and
a first engaging portion mounted between the first clamping plate (11) and the second clamping plate (12) and having a first sharp part;
a detachable blade (20, 20A) mounted in the receiving area (13) of the holding body (10, 10A) and having
a blade portion formed on two sides of the detachable blade (20, 20A); and
a second engaging portion formed on an outer surface of an end of the detachable blade (20, 20A) and engaging with the first engaging portion of the holding body (10, 10A), the second engaging portion having
a second sharp part corresponding to and engaging with the first sharp part of the first engaging portion; and
a fixing element securely mounted through the first clamping plate (11), the second clamping plate (12) and the detachable blade (20, 20A).

2. The screw tap with replaceable tool bit as claimed in claim 1, wherein the blade portion of the detachable blade (20, 20A) has
multiple cutting edges (21) disposed at one of two ends of the detachable blade (20, 20A); and
at least one wiper (22) disposed at the other end of the detachable blade (20, 20A);
wherein, the width of the detachable blade (20, 20A) gradually increases from the cutting edges (21) to the at least one wiper (22).

3. The screw tap with replaceable tool bit as claimed in claim 1, wherein
the second engaging portion is a flange (24) formed on and protruding from the an end of the detachable blade (20), the flange (24) has two outer inclined surfaces, and the second sharp part is formed on a center of a top end of the flange (24);
the first engaging portion of the holding body (10) has an extending block (14) and a groove (15), the extending block (14) is formed on two inner surfaces of the first clamping plate (11) and of the second clamping plate (12) and is disposed in an end of the receiving area (13), the groove (15) is formed in a surface of the extending block (14) and has two inner inclined surfaces, and the first sharp part is formed in a center of a bottom end of the groove (15); and
the flange (24) of the detachable blade (20) engages with the groove (15) of the holding body (10).

4. The screw tap with replaceable tool bit as claimed in claim 2, wherein
the second engaging portion is a flange (24) formed on and protruding from an end of the detachable blade (20) connecting to the at least one wiper (22), the flange (24) has two outer inclined surfaces, and the second sharp part is formed on a center of a top end of the flange (24) ;
the first engaging portion of the holding body (10) has an extending block (14) and a groove (15), the extending block (14) is formed on two inner surfaces of the first clamping plate (11) and of the second clamping plate (12) and is disposed in an end of the receiving area (13), the groove (15) is formed in a surface of the extending block (14) and has two inner inclined surfaces, and the first sharp part is formed in a center of a bottom end of the groove (15); and
the flange (24) of the detachable blade (20) engages with the groove (15) of the holding body (10).

5. The screw tap with replaceable tool bit as claimed in claim 1, wherein
the holding body (10A) has an extending block (14A) ;
the first engaging portion of the holding body (10A) is a flange (15A), the flange (15A) is formed on and protruding from an outer surface of the extending block (14A), and the flange (15A) has two outer inclined surfaces, and the first sharp part is formed on a center of a top end of the flange (15A); and
the second engaging portion of the detachable blade (20A) is a groove (24A) formed in an end of the detachable blade (20A), the groove (24A) has two inner inclined surfaces and the second sharp part is formed in a center of a bottom end of the groove (24A), and the groove (24A) of the detachable blade (20A) engages with the flange (15A) of the holding body (10A).

6. The screw tap with replaceable tool bit as claimed in claim 2, wherein
the holding body (10A) has an extending block (14A);
the first engaging portion of the holding body (10A) is a flange (15A), the flange (15A) is formed on and protruding from an outer surface of the extending block (14A), and the flange (15A) has two outer inclined surfaces, and the first sharp part is formed on a center of a top end of the flange (15A); and
the second engaging portion of the detachable blade (20A) is a groove (24A) formed in an end of the detachable blade (20A) connecting to the at least one wiper (22), the groove (24A) has two inner inclined surfaces, and the second sharp part is formed in a center of a bottom end of the groove (24A), and the groove (24A) of the detachable blade (20A) engages with the flange (15A) of the holding body (10A).

7. The screw tap with replaceable tool bit as claimed in any one of claims 3 to 6, wherein the holding body (10, 10A) further has a gap formed through the first clamping plate (11) and the extending block (14, 14A), the groove is formed in a surface of the extending block (14, 14A).

8. The screw tap with replaceable tool bit as claimed in any one of claims 1 to 6, wherein the first clamping plate (11) further has a through hole (111), the through hole (111) is formed through the first clamping plate (11), a screw hole (121) is formed through the second clamping plate (12) and aligns with the through hole (111) of the first clamping plate (11), the detachable blade (20, 20A) further has a through hole (23) formed through the detachable blade (20, 20A), the fixing element is a screw bolt, and the screw bolt is mounted through the through hole (111) of the first clamping plate (11) and the through hole (23) of the detachable blade (20, 20A) and is securely engaged with the screw hole (121) of the second clamping plate (12).

9. The screw tap with replaceable tool bit as claimed in any one of claims 1 to 6, wherein the holding body (10, 10A) is made of steel.

10. The screw tap with replaceable tool bit as claimed in claim 7, wherein the holding body (10, 10A) is made of steel.
